(19) Europäisches Patentamt
European Patent Office
Office européen des brevets

(11) EP 2 300 128 B1

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: **09769122.4**

(22) Anmeldetag: **09.06.2009**

(51) Int Cl.:
***B01D 53/14*** *(2006.01)* ***C10L 3/10*** *(2006.01)*

(86) Internationale Anmeldenummer:
**PCT/EP2009/057101**

(87) Internationale Veröffentlichungsnummer:
**WO 2009/156273 (30.12.2009 Gazette 2009/53)**

# (54) ABSORPTIONSMITTEL UND VERFAHREN ZUR ENTFERNUNG VON SAUERGASEN AUS FLUIDSTRÖMEN, INSBESONDERE AUS RAUCHGASEN

ABSORPTION MEDIUM AND METHOD FOR REMOVING SOUR GASES FROM FLUID STREAMS, IN PARTICULAR FROM FLUE GASES

AGENT ABSORBANT ET PROCÉDÉ POUR ÉLIMINER DES GAZ ACIDES CONTENUS DANS DES FLUX DE FLUIDE, EN PARTICULIER DES GAZ DE FUMÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.06.2008 EP 08158768**
**24.04.2009 EP 09158689**

(43) Veröffentlichungstag der Anmeldung:
**30.03.2011 Patentblatt 2011/13**

(73) Patentinhaber: **BASF SE**
**67056 Ludwigshafen (DE)**

(72) Erfinder:
- **LICHTFERS, Ute**
  **76187 Karlsruhe (DE)**
- **THIELE, Robin**
  **67346 Speyer (DE)**
- **VOGES, Susanna**
  **67059 Ludwigshafen (DE)**
- **SIEDER, Georg**
  **67098 Bad Dürkheim (DE)**
- **SPUHL, Oliver**
  **91058 Erlangen (DE)**
- **GARCIA ANDARCIA, Hugo Rafael**
  **68161 Mannheim (DE)**

(56) Entgegenhaltungen:
**EP-A- 0 647 462**
**GB-A- 767 317**
**GB-A- 871 754**
**US-B1- 6 267 939**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 300 128 B1

Printed by Jouve, 75001 PARIS (FR)

## Beschreibung

Die vorliegende Erfindung betrifft ein Absorptionsmittel für Sauergase enthaltend ein Oligoamin (A) und ein Piperazinderivat (B), beim dem das Gewichtsverhältnis von Oligoamin (A) zum Piperazinderivat (B) 0,2 bis 25 beträgt. Des Weiteren betrifft die vorliegende Erfindung ein Verfahren zur Entfernung von Sauergasen aus einem Gasstrom durch Inkontaktbringen des Gasstroms bei einem Druck von 0,05 bis 10 MPa abs mit einer auf eine Temperatur von 20 bis 80°C temperierten wässrigen Lösung des genannten Absorptionsmittels.

Die Entfernung von Sauergasen, wie z.B. $CO_2$, $H_2S$, $SO_2$, COS, $CS_2$, HCN oder Merkaptanen, aus Fluidströmen, wie Erdgas, Raffineriegas, Synthesegas, ist aus unterschiedlichen Gründen von Bedeutung. Kohlendioxid muss beispielsweise aus Erdgas entfernt werden, da eine hohe Kohlendioxid-Konzentration den Brennwert des Gases reduziert. Außerdem kann Kohlendioxid in Verbindung mit Feuchtigkeit, die in den Fluidströmen häufig mitgeführt wird, zu Korrosion an Leitungen und Armaturen führen. Zudem muss auch der Gehalt an Schwefelverbindungen im Erdgas durch geeignete Aufbereitungsmaßnahmen reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und, vor allem Schwefeldioxid, toxisch.

Die Entfernung von Kohlendioxid aus Verbrennungsabgasen beziehungsweise Rauchgasen ist insbesondere zur Verminderung der Emission von Kohlendioxid, welches als Hauptursache für den so genannten Treibhauseffekt angesehen wird, wünschenswert. Rauchgase weisen in der Regel einen Kohlendioxid-Partialdruck von 10 bis 500 hPa auf. Üblicherweise fallen diese bei einem Druck nahe dem Atmosphärendruck an. Um eine wirksame Entfernung von Kohlendioxid zu erreichen, muss das Absorptionsmittel eine hohe Kohlendioxid-Affinität aufweisen. Die hohe Kohlendioxid-Affinität bedingt andererseits, dass bei der Regeneration des Absorptionsmittels das Kohlendioxid in der Regel nicht vollständig ausgetrieben wird und das regenerierte Absorptionsmittel eine Kohlendioxid-Restbeladung aufweist. Als Kreislaufkapazität steht nur die Differenz zwischen der maximalen Beladbarkeit des Absorptionsmittels und der Restbeladung des regenerierten Absorptionsmittels zur Verfügung.

Ein in der Praxis zur Entfernung von Sauergasen aus beispielsweise Synthesegas, Erdgas oder Biogas besonders bewährtes Absorptionsmittel ist in US 4,336,233 beschrieben. Es handelt sich dabei um eine wässrige Lösung aus Methyldiethanolamin

(MDEA) und Piperazin als Aktivator zur Erhöhung der Absorptionsgeschwindigkeit. Das beschriebene Absorptionsmittel enthält 1,5 bis 4,5 Mol/L Methyldiethanolamin und 0,05 bis 0,8 Mol/L Piperazin.

EP-A 0 879 631 beschreibt ein Verfahren zum Entfernen von Kohlendioxid aus einem Verbrennungsgas durch Inkontaktbringen des Verbrennungsgases bei Atmosphärendruck mit einer wässrigen Aminlösung. Die Aminlösung enthält ein sekundäres und ein tertiäres Amin, jeweils in einer Konzentration von 10 bis 45 Gew.-%.

US 6,165,433 betrifft die Kohlendioxid-Entfernung aus einem Gasstrom, dessen Kohlendioxidpartialdruck 10 psia (689 hPa) oder weniger beträgt, unter Verwendung eines Absorptionsmittels, das Wasser, 5 bis 35 Gew.-% eines schnellen Amins und 5 bis 50 Gew.-% eines langsamen Amins enthält. Schnelle Amine sind Monoethanolamin, Diethanolamin, Piperazin und Diisopropanolamin. Langsame Amine sind Methyldiethanolamin, Triethanolamin, und sterisch gehinderte Amine wie 2-Amino-2-methyl-1-propanol.

WO 2005/087,350 offenbart ein Verfahren zur Entfernung von Kohlendioxid aus Rauchgasen mit einem flüssigen Absorptionsmittel, welches ein tertiäres aliphatisches Amin und einen Aktivator wie 3-Methylaminopropylamin umfasst. Das tertiäre aliphatische Amin soll eine Reaktionsenthalpie $\Delta_R H$ der Protonierungsreaktion aufweisen, die größer ist als diejenige von Methyldiethanolamin. Das Absorptionsmittel enthält 20 bis 60 Gew.-% tertiäres aliphatisches Amin und 1 bis 10 Gew.-% Aktivator.

Häufig werden Alkanolamine für die Entfernung von Kohlendioxid aus Rauchgasen eingesetzt.

WO 02/007,862 beschreibt ein Verfahren und ein Absorptionsmittel zur Entfernung von Sauergasen aus einem Fluidstrom. Das Absorptionsmittel enthält ein tertiäres aliphatisches Alkanolamin und einen Aktivator wie 3-Methylaminopropylamin. Die Behandlung von Fluidströmen mit niedrigen Kohlendioxidpartialdrücken ist nicht angesprochen.

WO 2007/144,372 beschreibt ein Verfahren zur Entfernung von Kohlendioxid aus Rauchgasen durch Inkontaktbringen mit einer wässrigen Lösung eines tertiären aliphatischen Alkanolamins und eines näher spezifizierten N-Alkyl-diamins. Als bevorzugte tertiäre aliphatische Alkanolamine sind Methyldiethanolamin, Methyldiisopropanolamin und Butyl-diethanolamin genannt. Als bevorzugter Aktivator ist insbesondere 3-Methylaminopropylamin genannt.

Insbesondere wird in großtechnischen Verfahren zur Entfernung von Kohlendioxid aus Rauchgasen bevorzugt Monoethanolamin (MEA) als Absorptionsmittel eingesetzt. So beschreiben etwa Satish Reddy et al. von Fluor Corporation in einem Abstract zur Second National Conference on Carbon Sequestration des National Energy Technology Laboratory / Department of Energy, Alexandria, VA, U.S.A., veranstaltet vom 5.-8. Mai 2003, mt dem Titel "Fluor's Econamine FG Plus[SM] Technology - An enhanced aminebased $CO_2$ capture process" die Entfernung von Kohlendioxid aus Rauchgasen mit einem Absorptionsmittel enthaltend Monoethanolamin und einem geheimen Inhibitor. Letzterer unterdrückt die Degenerierung von Monoethanolamin durch die Gegenwart von Sauerstoff und schützt die Anlage zugleich von Korrosion.

Dieses Verfahren wurde zum Zeitpunkt der Publikation bereits in 23 kommerziell betriebenen Anlagen eingesetzt.

Technologien auf Basis von Monoethanolamin zeichnen sich durch eine hohe Reaktivität zwischen dem Amin und Kohlendioxid aus. Die hohe Reaktivität geht aber nachteilig mit einer hohen Absorptionsenthalpie und einem hohen Energiebedarf zur Regeneration einher. Andere Alkanolamine wie etwa Diethanolamin oder Methyldiethanolamin, die einen geringeren Energiebedarf zur Regeneration aufweisen, eignen sich auf Grund ihrer langsameren Reaktionskinetik zwischen Kohlendioxid und Amin für diese Trennaufgabe nur bedingt.

WO 99/004,885 lehrt die Entfernung von Sauergasen aus einem Gasstrom durch Inkontaktbringen mit einer wässrigen Lösung eines näher spezifizierten Oligoamins mit einer Konzentration von 20 bis 60 Gew.-%, welches bevorzugt eine AlkalimetallVerbindung oder ein aliphatisches oder cycloaliphatisches Mono- oder Diamin als Aktivator enthält. Als Aktivatoren sind namentlich genannt Natriumhydroxid, Natriumhydrogencarbonat, Triethylendiamin , Dicyclohexylamin, N-Ethyl-cyclohexylamin und N,N-Dimethyl-cyclohexylamin. Nachteilig am Einsatz von Natriumhydroxid und Natriumhydrogencarbonat als Aktivator ist der deutlich erhöhte Energiebedarf bei der Regeneration. Nachteilig am Einsatz von Triethylendiamin ist dessen langsame Reaktionskinetik, welche eine längere Verweilzeit beziehungsweise eine größere Austauschfläche bei der Absorption nach sich zieht. Nachteilig am Einsatz von Dicyclohexylamin, N-Ethylcyclohexylamin und N,N-Dimethyl-cyclohexylamin ist deren begrenzte Mischbarkeit mit Wasser, welche die Flexibilität in der Anpassung des Aktivatorengehalts einschränkt.

Aufgabe der vorliegenden Erfindung war es, ein Absorptionsmittel für Sauergase und ein Verfahren zur Entfernung von Sauergasen aus Fluidströmen zu finden, welches die genannten Nachteile des Standes der Technik nicht oder nur in vermindertem Ausmaß aufweist und welches insbesondere gegenüber den bekannten Verfahren unter Verwendung von Monoethanolamin eine höhere Kreislaufkapazität und einen geringeren Regenerationsbedarf ermöglicht, und gleichzeitig eine ausreichend schnelle Reaktionskinetik zwischen Kohlendioxid und dem Amin besitzt.

Demgemäß wurde ein Absorptionsmittel für Sauergase gefunden, welches

(A) ein Oligoamin der allgemeinen Formel (I)

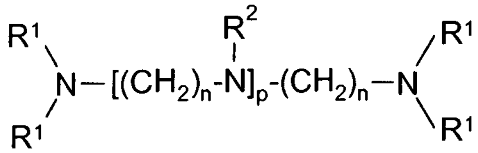

(I)

worin
$R^1$ gleich Wasserstoff oder $C_1$- bis $C_3$-Alkyl,
$R^2$ gleich Wasserstoff oder $C_1$- bis $C_3$-Alkyl,
n gleich 2 bis 6, und
p gleich 1 bis 3; und
(B) ein Piperazinderivat der allgemeinen Formel (II)

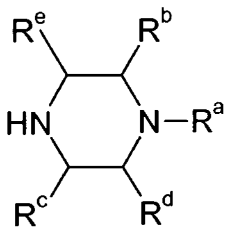

(II)

worin
$R^a$ gleich Wasserstoff, $C_1$- bis $C_3$-Alkyl, $-CH_2CH_2OH$ oder $-(CH_2)_mNH_2$ mit m gleich 1 bis 3,
$R^b$ gleich Wasserstoff, $C_1$- bis $C_3$-Alkyl oder $-(CH_2)_nNH_2$ mit n gleich 1 bis 3,
$R^c$ gleich Wasserstoff, $C_1$- bis $C_3$-Alkyl oder $-(CH_2)_oNH_2$ mit o gleich 1 bis 3,
$R^d$ gleich Wasserstoff, $C_1$- bis $C_3$-Alkyl oder $-(CH_2)_pNH_2$ mit p gleich 1 bis 3, und
$R^e$ gleich Wasserstoff, $C_1$- bis $C_3$-Alkyl oder $-(CH_2)_qNH_2$ mit q gleich 1 bis 3, enthält, wobei das Gewichtsverhältnis von Oligoamin (A) zum Piperazinderivat (B) m[Oligoamin (A)] / m[Piperazinderivat (B)] 0,2 bis 25 beträgt.

Als Beispiele geeigneter Oligoamine (A) seien genannt Diethylentriamin, Bis(3-methylamino-propyl)-methylamin, Dimethyldipropylentriamin, Dipropylentriamin, N,N',N"-Trimethyl-bis(hexamethylen)-triamine und Bis(3-dimethylamino-propyl)-amin. Bevorzugt ist ein Oligoamin (A) der allgemeinen Formel (I), bei dem $R^1$ gleich Wasserstoff oder Methyl, $R^2$ gleich Wasserstoff oder Methyl, n gleich 2 oder 3, und p gleich 1 ist. Besonders bevorzugt sind Diethylentriamin, Bis(3-methylamino-propyl)-methylamin, Dimethyldipropylentriamin, Dipropylentriamin und Bis(3-dimethylamino-propyl)-amin, insbesondere Bis(3-dimethylamino-propyl)-amin ($R^1$ gleich Methyl, $R^2$ gleich Wasserstoff, n gleich 3 und p gleich 1).

Bevorzugt ist ein Piperazinderivat(B) der allgemeinen Formel (II), bei dem
$R^a$ gleich Wasserstoff, Methyl, Ethyl, $-CH_2CH_2OH$ oder $-CH_2CH_2NH_2$,
$R^b$ gleich Wasserstoff oder Methyl,
$R^c$ gleich Wasserstoff oder Methyl,$R^d$ gleich Wasserstoff oder Methyl, und
$R^e$ gleich Wasserstoff oder Methyl.

Als besonders bevorzugte Piperazinderivate (B) seien genannt Piperazin, N-Hydroxyethyl-piperazin, N-Aminoethyl-piperazin, 2-Methyl-piperazin und 2,5-Dimethylpiperazin. Ganz besonders bevorzugt ist Piperazin ($R^a$ bis Re gleich Wasserstoff).

Das Gewichtsverhältnis von Oligoamin (A) zum Piperazinderivat (B)

$$m[\text{Oligoamin (A)}] / m[\text{Piperazinderivat (B)}]$$

beträgt beim erfindungsgemäßen Absorptionsmittel 0,2 bis 25, bevorzugt 0,2 bis 4 und besonders bevorzugt 0,3 bis 2.

Bezogen auf die Gesamtmenge des Absorptionsmittels beträgt die Konzentration an Oligoamin (A) plus Piperazinderivat (B) besonders vorteilhaft 10 bis 60 Gew.-% und insbesondere 20 bis 50 Gew.-%.

Die Konzentration an Oligoamin (A) bezogen auf die Gesamtmenge des Absorptionsmittels beträgt bevorzugt 1 bis 20 Gew.-%, besonders bevorzugt 1 bis 18 Gew.-% und ganz besonders bevorzugt 10 bis 18 Gew.-%.

Besonders vorteilhaft enthält das Absorptionsmittel des Weiteren Wasser, wobei das Gewichtsverhältnis der Summe von Oligoamin (A) plus Piperazinderivat (B) zu Wasser

$$\{m[\text{Oligoamin (A)}] + m[\text{Piperazinderivat (B)}]\} / m[\text{Wasser}]$$

bevorzugt 0,11 bis 1,5 und besonders bevorzugt 0,25 bis 1 beträgt.

Das Absorptionsmittel kann zudem noch zusätzlich physikalische Lösungsmittel enthalten. Unter einem physikalischen Lösungsmittel versteht man ein Lösungsmittel, welches nur eine relativ schwache Wechelwirkung mit dem Sauergas eingeht. Beispiele geeigneter und in der Praxis gängiger physikalischer Absorptionsmittel sind etwa Cyclotetramethylensulfon (Sulfolan) und dessen Derivaten, aliphatische Säureamide (z.B. Acetylmorpholin, N-Formylmorpholin), N-alkylierte Pyrrolidone und Piperidone (z.B. N-Methylpyrrolidon), Propylencarbonat, Methanol oder Dialkylether von Polyethylenglykolen.

Ferner wurde ein Verfahren zur Entfernung von Sauergasen aus einem Gasstrom durch Inkontaktbringen des Gasstroms bei einem Druck von 0,05 bis 10 MPa abs mit einem auf eine Temperatur von 20 bis 80°C temperierten flüssigen Absorptionsmittels gefunden, das dadurch gekennzeichnet ist, dass man als flüssiges Absorptionsmittel ein Absorptionsmittel einsetzt, welches

(A) ein Oligoamin der allgemeinen Formel (I)

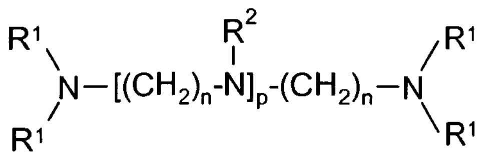

(I)

worin
$R^1$ gleich Wasserstoff oder $C_1$- bis $C_3$-Alkyl,
$R^2$ gleich Wasserstoff oder $C_1$- bis $C_3$-Alkyl,
n gleich 2 bis 6, und
p gleich 1 bis 3;

(B) ein Piperazinderivat der allgemeinen Formel (II)

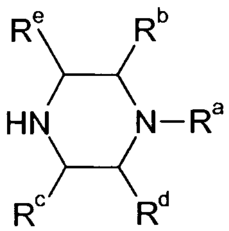

(II)

worin
$R^a$ gleich Wasserstoff, $C_1$- bis $C_3$-Alkyl, $-CH_2CH_2OH$ oder $-(CH_2)_mNH_2$ mit m gleich 1 bis 3,
$R^b$ gleich Wasserstoff, $C_1$- bis $C_3$-Alkyl oder $-(CH_2)_nNH_2$ mit n gleich 1 bis 3,
$R^c$ gleich Wasserstoff, $C_1$- bis $C_3$-Alkyl oder $-(CH_2)_oNH_2$ mit o gleich 1 bis 3,
$R^d$ gleich Wasserstoff, $C_1$- bis $C_3$-Alkyl oder $-(CH_2)_pNH_2$ mit p gleich 1 bis 3, und
Re gleich Wasserstoff, $C_1$- bis $C_3$-Alkyl oder $-(CH_2)_qNH_2$ mit q gleich 1 bis 3, und
(C) Wasser
enthält, wobei das Gewichtsverhältnis von Oligoamin (A) zum Piperazinderivat (B)

$$m[\text{Oligoamin (A)}] / m[\text{Piperazinderivat (B)}]$$

0,2 bis 25 und das Gewichtsverhältnis der Summe von Oligoamin (A) plus Piperazinderivat (B) zu Wasser

$$\{m[\text{Oligoamin (A)}] + m[\text{Piperazinderivat (B)}]\} / m[\text{Wasser}]$$

0,11 bis 1,5 beträgt.

Bevorzugt setzt man beim erfindungsgemäßen Verfahren die bei der Beschreibung des Absorptionsmittel genannten bevorzugten Absorptionsmittel ein.

Die Absorption des Sauergases erfolgt dabei durch Inkontaktbringen des zu reinigenden Gasstroms mit dem flüssigen Absorptionsmittel in einer geeigneten Vorrichtung. Geeignete Vorrichtungen umfassen wenigstens eine Waschkolonne, die beispielsweise als Füllkörper-, Packungs- oder Bodenkolonne ausgestaltet sein kann, und/oder andere Absorber wie beispielsweise einen Membrankontaktor, einen Radialstromwäscher, einen Strahlwäscher, einen Venturi-Wäscher oder einen Rotations-Sprühwäscher. Die Behandlung des Gasstroms mit dem Absorptionsmittel erfolgt jedoch bevorzugt in einer Waschkolonne. Diese wird besonders vorteilhaft im Gegenstrom betrieben. Der Gasstrom wird dabei im Allgemeinen in den unteren Bereich und das Absorptionsmittel in den oberen Bereich der Kolonne eingespeist.

Das Inkontaktbringen erfolgt beim erfindungsgemäßen Verfahren bei einem Druck von 0,05 bis 10 MPa abs.

Das flüssige Absorptionsmittel ist dabei auf eine Temperatur von 20 bis 80°C, bevorzugt hinsichtlich der Untergrenze auf eine Temperatur von größer oder gleich 30°C und hinsichtlich der Obergrenze bei eine Temperatur von kleiner oder gleich 60°C temperiert. Das Gas hat beim Eintritt in die Abtrennvorrichtung im Allgemeinen eine Temperatur von 20 bis 80°C, bevorzugt von 30 bis 60°C.

In einer vorteilhaften Ausführungsform führt man die Entfernung des Sauergases in einer im Gegenstrom betriebenen Waschkolonne, bei der sich im Inneren eine diskontinuierliche flüssige Phase ausbildet, in Gegenwart von im Inneren der Waschkolonne vorhandenen Aktivkohle durch. Die einzusetzende Waschkolonne enthält zudem die üblicherweise verwendeten Einbauten wie beispielsweise Füllkörper oder Packungen. Die Aktivkohle weist bevorzugt einen Kohlenstoffgehalt von über 90 Gew.-% und eine BET-Oberfläche von 300 bis 2000 $m^2/g$ auf. Ihre Konzentration beträgt im Allgemeinen 1 bis 2000 g Aktivkohle pro $m^3$ Volumen der Waschkolonne. Die Aktivkohle kann auf verschiedene Arten zugeführt werden. In einer bevorzugten Ausführungsform wird sie im flüssigen Absorptionsmittel suspendiert. In diesem Fall liegt ihre Partikelgröße bevorzugt im Bereich von 0,1 bis 1000 $\mu m$, besonders bevorzugt 0,1 bis 50 $\mu m$. Bezogen auf das flüssige Absorptionsmittel beträgt die Konzentration der suspendierten Aktivkohle bevorzugt 0,01 bis 20 kg pro $m^3$, besonders bevorzugt 1 bis 10 kg pro $m^3$. In einer anderen bevorzugten Ausführungsform wird sie in örtlich fixierter Form innerhalb der Waschkolonne angebracht. In diesem Fall befindet sich die Aktivkohle beispielsweise in fest angebrachten flüssigkeits- und gasdurchlässigen Taschen (etwa in Form von Aktivkohle-Pellets) oder in mit Aktivkohle

beschichteten Packungen oder Füllkörpern fixiert in der Waschkolonne. Bezogen auf das Volumen der Waschkolonne beträgt die Konzentration der fixierten Aktivkohle bevorzugt 1 g bis 2 kg pro $m^3$, besonders bevorzugt 100 g bis 1 kg pro $m^3$. Durch die Gegenwart von Aktivkohle wird die Absorptionsgeschwindigeit des flüssigen Absorptionsmittels gesteigert, was zu einer noch effektiveren Verfahrensführung führt. Weitere Details zum Einsatz von Aktivkohle in der Absorption von Sauergasen in wässrigen alkalischen Absorptionsmitteln sind in der europäischen Prioritätsschrift mit dem Aktenzeichen EP-Az. 09 154 427.0 beschrieben. Aus dem mit dem Sauergas beladenen Absorptionsmittel kann das Sauergas in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen regeneriert man das beladene Absorptionsmittel durch Erwärmung (beispielsweise auf 70 bis 110°C) durch Entspannung und/oder durch Strippung mit einem inerten Fluid, oder eine Kombination aus zwei oder allen drei der genannten Maßnahmen. Unter einem inerten Fluid ist ein Gas zu verstehen, welches weder mit dem Absorptionsmittel noch mit dem Sauergas chemisch reagiert und sich auch nicht oder höchstens unwesentlich im Absorptionsmittel löst. Als geeignete inerte Fluide seien beispielsweise Stickstoff, Wasserdampf oder Luft genannt.

In der Regel wird das beladene Absorptionsmittel zur Regeneration erwärmt und das freigesetzte Sauergas zum Beispiel in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann gegebenenfalls auch bereits eine teilweise Regenerierung des beladenen Absorptionsmittels unter Freisetzung von Sauergas erfolgen. Der erhaltene gas-flüssig-gemischtphasige Strom wird in diesem Fall dann in ein Phasentrenngefäß geleitet, aus dem das Sauergas abgezogen wird. Die Flüssigphase wird zur vollständigen Regeneration des Absorptionsmittels in die Desorptionskolonne geleitet.

Als Gasströme, aus denen die Sauergase zu entfernen sind, können grundsätzlich alle natürlichen und synthetischen, sauerstoffhaltigen und sauerstofffreien Gasströme eingesetzt werden, wie beispielsweise Erdgas, Raffineriegase, Synthesegase, Biogase oder Rauchgase. Das erfindungsgemäße Verfahren erfolgt beim Einsatz von Erdgasen bevorzugt bei einem Druck von 3 bis 10 MPa abs, beim Einsatz von Raffineriegasen bevorzugt bei einem Druck von 0,05 bis 10 MPa abs, beim Einsatz von Synthesegasen bevorzugt bei einem Druck von 1,5 bis 6 MPa abs und beim Einsatz von Biogasen oder Rauchgasen bevorzugt bei einem Druck von 0,05 bis 0,5 MPa abs.

Ganz besonders bevorzugt ist beim erfindungsgemäßen Verfahren die Entfernung von Kohlendioxid aus Sauerstoff-haltigen Gasströmen. Diese enthalten bevorzugt 0,1 bis 21 Vol.-% Sauerstoff. Als bevorzugte, Sauerstoff-enthaltende Gasströme seien insbesondere genannt

- Verbrennungs- oder Rauchgase (flue gas), welche durch die Verbrennung organsicher Substanzen erhalten werden;
- Gase aus der Kompostierung oder Lagerung organischer Substanzen, einschließlich organischer Abfallstoffe; und
- Gase aus der bakteriellen Zersetzung organischer Substanzen.

Als Sauergase sind Verbindungen zu verstehen, welche in dem zu reinigenden Gasstrom unter den vorliegenden Bedingungen gasförmig vorliegen und in wässriger Lösung einen pH-Wert von < 7 aufweisen. Typische Sauergase sind beispielsweise Kohlendioxid ($CO_2$) Schwefelwasserstoff ($H_2S$), Schwefeldioxid ($SO_2$), Kohlenstoffoxidsulfid (COS), Kohlenstoffdisulfid ($CS_2$), Cyanwasserstoff (HCN) und Merkaptane (RSH). Durch das erfindungsgemäße Verfahren werden bevorzugt Kohlendioxid und Schwefelwasserstoff und besonders bevorzugt Kohlendioxid entfernt. So beträgt die Kohlendioxid-Konzentration im bevorzugt eingesetzten Gasstrom bevorzugt 0,1 bis 50 Vol.-%.

Im Allgemeinen enthalten die bevorzugten Gasströme weniger als 100 mg/$Nm^3$ Schwefeldioxid und bevorzugt weniger als 50 mg/$Nm^3$ Schwefeldioxid. Ferner enthalten die bevorzugten Gasströme im Allgemeinen weniger als 100 mg/$Nm^3$ Stickoxide und bevorzugt weniger als 50 mg/$Nm^3$ Stickoxide.

Im Folgenden ist exemplarisch und ohne einschränkend zu wirken ein mögliches Vorgehen bei der Kohlendioxid-Entfernung aus Rauchgasen unter Anwendung des erfindungsgemäßen Verfahrens beschrieben. Vor der erfindungsgemäßen Absorption des Kohlendioxids wird das Rauchgas vorzugsweise erst einer Wäsche mit einer wässrigen Flüssigkeit, insbesondere mit Wasser, unterzogen, um das Rauchgas abzukühlen und zu befeuchten (quenchen). Bei dieser Wäsche können auch Stäube oder gasförmige Verunreinigungen wie Schwefeldioxid entfernt werden.

Anschließend wird das vorbehandelte Rauchgas der eigentlichen Kohlendioxid-Entfernung zugeführt. Fig. 1 zeigt hierzu eine schematische Darstellung einer zur Durchführung des erfindungsgemäßen Verfahrens geeigneten Anlage. Darin bedeuten:

1 = Rauchgas
2 = An Kohlendioxid verarmtes Rauchgas

3 = Abgetrenntes Kohlendioxid
A = Absorptionskolonne
B = Wasserwäsche
C = Absorption
D = Kühler
E = Kühler
F = Pumpe
G = Pumpe
H = Desorptionskolonne
I = Wärmetauscher
J = Verdampfer (Reboiler)
K = Kondensator

Gemäß Fig. 1 wird Rauchgas 1 in den unteren Teil der Absorptionskolonne A geleitet und im Gegenstrom mit dem Absorptionsmittel in Kontakt gebracht. Das an Kohlendioxid verarmte Rauchgas wird im oberen Teil der Absorptionskolonne noch mit Wasser gewaschen und über Kopf als Strom 2 aus der Kolonne geführt. Das mit Kohlendioxid beladene Absorptionsmittel wird am Boden der Absorptionskolonne A entnommen und über die Pumpe G und dem Wärmetauscher I in die Desorptionskolonne H geführt. Im unteren Teil der Desorptionskolonne wird das beladene Absorptionsmittel über den Verdampfer J erwärmt. Durch die Temperaturerhöhung geht ein Teil des absorbierten Kohlendioxids wieder in die Gasphase über. Diese wird am Kopf der Desorptionsko-Ionne H abgeführt und im Kondensator K abgekühlt. Auskondensiertes Absorptionsmittel wird über dern Kopf wieder zurückgeführt. Das gasförmige Kohlendioxid wird als Strom 3 entnommen. Das regenerierte Absorptionsmittel wird über die Pumpe F und dem Kühler E wieder zur Absorptionskolonne A rückgeführt.

Das erfindungsgemäße Absorptionsmittel zeigt überraschenderweise sehr ausgewogene Eigenschaften hinsichtlich der Absorptionsrate, welche erstaunlicherweise sehr hoch ist, und hinsichtlich des Energiebedarfs zur Regeneration, welcher erstaunlicherweise sehr niedrig ist. Somit ist aufgrund der hohen Absorptionsrate der Einsatz einer kleineren Absorptionskolonne möglich, da eine geringere Austauschfläche beziehungsweise eine kürzere Verweilzeit absolut ausreichend ist. Ebenso kann auch der Verdampfer (Reboiler) für die Desorptionskolonne kleiner ausgelegt werden, da weniger Energie zur Regeneration des Absorptionsmittels benötigt wird. Durch die hohe Absorptionsrate kann durch das erfindungsgemäße Absorptionsmittel auch eine hohe Kreislaufkapazität erzielt werden.

Beispiele

Beispiel 1: Relative Kreislaufkapazität und relativer Dampfmengenbedarf zur Regeneration bei erfindungsgemäßen und nicht erfindungsgemäßen Absorptionsmitteln

Zur Bestimmung der Kohlendioxid-Kreislaufkapazität und des Regenerationsbedarfs wurden Laborversuche mit verschiedenen, mit Kohlendioxid beladenen Absorptionsmitteln durchgeführt. Als Vergleichsbasis dient 30 Gew.-% Monoethanolamin (MEA) in Wasser. Das erfindungsgemäße Absorptionsmittel enthielt 15 Gew.-% Bis(3-dimethyl-amino-propyl)-amin (BisDMAPA) und 15 Gew.-% Piperazin.

Zur Ermittelung der relativen Kreislaufkapazität und der Abschätzung des relativen Dampfmengenbedarfs zur Regeneration des Absorptionsmittel wurden die Gleichgewichtsbeladungen von Kohlendioxid im Absorptionsmittel in Abhängigkeit vom Kohlendioxid-Partialdruck bei 40 (für Absorbersumpf) und 120°C (für Desorbersumpf) bestimmt. Diese Messungen wurden für alle in der Tabelle 1 aufgeführten Systeme durchgeführt. Zur Bestimmung der Gleichgewichtsbeladung wurde ein Glasdruckgefäß mit einem Volumen von ca. 100 $cm^3$ eingesetzt. In diesem wurde eine definierte Menge des Absorptionsmittel vorgelegt, das Gefäß evakuiert, und bei konstanter Temperatur Kohlendioxid stufenweise über ein definiertes Gasvolumen zudosiert. Die in der Flüssigphase gelöste Menge Kohlendioxid wurde unter Berücksichtigung der Gasraumkorrektur durch die darüberstehende Gasphase berechnet.

Für die Abschätzungen der Kreislaufkapazität des Absorptionsmittels wurden folgende Annahmen gemacht:

1. Der Absorber wird bei einem Gesamtdruck von einem bar mit einem Kohlendioxidhaltigen Rauchgas mit einem Kohlendioxid-Partialdruck von 130 hPa (entspricht in etwa 13 Vol.-% Kohlendioxid im Rauchgas bei Atmosphärendruck) beaufschlagt.
2. Im Absorbersumpf herrscht eine Temperatur von 40°C.
3. Bei der Regeneration herrscht im Desorbersumpf eine Temperatur von 120°C.
4. Im Absorbersumpf wird ein Gleichgewichtszustand erreicht. Der Kohlendioxid-Gleichgewichtspartialdruck ist somit gleich dem Feedgas-Partialdruck von 130 hPa.
5. Bei der Desorption herrscht ein Kohlendioxid-Partialdruck von 100 hPa im Desorbersumpf.

6. Bei der Desorption wird ein Gleichgewichtszustand erreicht.

Die Kapazität des Absorptionsmittels wurde aus der Beladung (in $Nm^3$ Kohlendioxid / t Absorptionsmittel) am Schnittpunkt der 40°C-Gleichgewichtskurve mit der Linie des konstanten Feedgas-Kohlendioxid-Partialdruckes von 13 kPa (beladene Lösung am Absorbersumpf im Gleichgewicht) und aus der Beladung am Schnittpunkt der 120°C-Gleichgewichtskurve mit der Linie des konstanten Partialdrucks von 100 hPa (regenerierte Lösung am Desorbersumpf im Gleichgewicht) ermittelt. Die Differenz beider Beladungen ist die Kreislaufkapazität des jeweiligen Lösungsmittels. Eine große Kapazität bedeutet, dass weniger Lösungsmittel im Kreis gefahren werden muss und damit die Apparate wie beispielsweise Pumpen, Wärmetauscher aber auch Rohrleitungen kleiner dimensioniert werden können. Weiterhin beeinflusst die Umlaufmenge auch die zum Regenerieren notwendige Energie.

Ein weiteres Maß für die Anwendungseigenschaften eines Absorptionsmittels ist die Steigung der Arbeitsgeraden im McCabe-Thiele-Diagramm des Desorbers. Für die Verhältnisse im Sumpf des Desorbers liegt die Arbeitsgerade in der Regel sehr nahe bei der Gleichgewichtslinie, so dass die Steigung der Gleichgewichtskurve näherungsweise der Steigung der Arbeitsgeraden gleichgesetzt werden kann. Bei konstanter Flüssigkeitsbelastung ist zur Regeneration eines Absorptionsmittels mit einer großen Steigung der Gleichgewichtskurve eine geringere Strippdampfmenge erforderlich. Der Energiebedarf zur Erzeugung des Strippdampfes trägt wesentlich zum Gesamtenergiebedarf des Kohlendioxid-Absorptionsprozesses bei.

Zweckmäßigerweise gibt man den Reziprokwert der Steigung an, da dieser direkt proportional zur benötigten Dampfmenge pro Kilogramm Absorptionsmittel ist. Dividiert man den Reziprokwert durch die Kapazität des Absorptionsmittels, so erhält man einen Vergleichswert, der direkt eine relative Aussage über die benötigte Dampfmenge pro absorbierter Kohlendioxid-Menge ermöglicht.

In Tabelle 1 sind für das erfindungsgemäße Absorptionsmittel die Werte der relativen Kreislaufkapazität und des relativen Dampfmengenbedarfs auf MEA normiert dargestellt. Im Vergleich zu 30 Gew.-% MEA steigt die relative Kreislaufkapazität beim Einsatz von 15 Gew.-% BisDMAPA + 15 Gew.-% Piperazin auf 128%. Der relative Dampfmengenbedarf sinkt signifikant auf 68%, was in der großtechnischen Anwendung ein enormes Sparpotenzial darstellt.

Beispiel 2: Relative Absorptionsraten bei erfindungsgemäßen und nicht erfindungsgemäßen Absorptionsmitteln

Zur Bestimmung der Stofftransportgeschwindigkeit des Kohlendioxids aus dem Gasstrom in das Absorptionsmittel wurden Messungen in einer Doppelrührzelle durchgeführt. Die Stofftransportgeschwindigkeit setzt sich bei einer Reaktivabsorption sowohl aus dem physikalischen Stofftransport als auch der Reaktionskinetik zwischen dem Absorptionsmittel und dem Kohlendioxid zusammen. Diese beiden Einflussgrößen können in der Doppelrührzelle als summarischer Parameter gemessen werden. Als Vergleichsbasen dienten 31,2 Gew.-% Monoethanolamin (MEA) in Wasser sowie 30 Gew.-% Bis(3-dimethylamino-propyl)-amin (BisDMAPA) in Wasser. Die erfindungsgemäßen Absorptionsmittel enthielten 15 bis 28,6 Gew.-% BisDMAPA und 1,4 bis 15 Gew.-% Piperazin.

Figur 2 zeigt eine schematische Darstellung der Doppelrührzelle mit folgenden Elementen:

A = Kohlendioxid-Vorratsbehälter
B = Doppelrührzelle
C = Thermostatierung
D = Dosierventil
E = Druckmeßgerät

Die Doppelrührzelle hatte einen inneren Durchmesser von 85 mm und ein Volumen von 509 mL. Die Zelle wurde während der Versuche auf 50°C thermostatisiert. Zur Durchmischung der Gas- und Flüssigphase war die Zelle gemäß der schematischen Darstellung mit zwei Rührern ausgerüstet. Vor Beginn des Versuches wurde die Doppelrührzelle evakuiert. Ein definiertes Volumen des entgasten Absorptionsmittels wurde in die Doppelrührzelle gefördert und auf 50°C thermostatisiert. Während des Aufheizens des unbeladenen Absorptionsmittels wurden bereits die Rührer eingeschaltet. Die Rührerdrehzahl wurde so gewählt, dass sich eine ebene Phasengrenzfläche zwischen der Flüssigphase und Gasphase einstellt. Eine Wellenbildung an der Phasengrenzfläche ist zu vermeiden, da hierdurch keine definierte Phasengrenzfläche vorliegen würde. Nachdem die gewünschte Versuchstemperatur erreicht wurde, wurde über ein Regelventil Kohlendioxid in den Reaktor eingeleitet. Der Volumenstrom wurde so geregelt, dass in der Doppelrührzelle während des Versuchs ein konstanter Druck von 50 hPa abs (entspricht Kohlendioxid-Partialdruck) herrschte. Mit zunehmender Versuchsdauer nahm der Volumenstrom an Kohlendioxid ab, da das Absorptionsmittel mit der Zeit gesättigt wurde und somit die Absorptionsrate abnahm. Der Volumenstrom an Kohlendioxid, der in die Doppelrührzelle strömte, wurde über die gesamte Versuchsdauer registriert. Das Versuchsende war erreicht sobald kein Kohlendioxid mehr in die Doppelrührzelle strömte. Das Absorptionsmittel lag am Versuchsende nahezu im Gleichgewichtszustand vor.

Zur Auswertung der Versuche wurde die Absorptionsrate in mol $CO_2$ / ($m^3$ Absorptionsmittel min) in Abhängigkeit

von der Beladung des Absorptionsmittels bestimmt. Die Absorptionsrate wurde aus dem registrierten Volumenstrom an Kohlendioxid und dem eingefüllten Volumen an Absorptionsmittel berechnet. Die Beladung wurde aus der akkumulierten Menge an Kohlendioxid, die der Doppelrührzelle zugeführt wurde, und der eingefüllten Masse an Absorptionsmittel bestimmt.

In Tabelle 2 sind die relativen Absorptionsraten von verschiedenen Absorptionsmitteln bei einer Beladung mit 10 und 20 $Nm^3$ $CO_2$ / t normiert auf BisDMAPA dargestellt.

Im Vergleich zu 30 Gew.-% BisDMAPA steigt die relative Absorptionsrate bei einer Beladung von 10 $Nm^3$ $CO_2$ pro t Absorptionsmittel beim Einsatz von 15 Gew.-% BisDMAPA + 15 Gew.-% Piperazin auf 269%. Bei einer Beladung von 20 $Nm^3$ $CO_2$ pro t Absorptionsmittel steigt die relative Absorptionsrate beim genannten Amingemisch auf 366%. Selbst bei einem Amingemisch mit nur 1,4 Gew.-% Piperazin und 28,6 Gew.-% BisDMAPA liegen die relativen Absorptionsraten bei 145% (10 $Nm^3$ $CO_2$ pro t Absorptionsmittel) beziehungsweise 182% (20 $Nm^3$ $CO_2$ pro t Absorptionsmittel). Die Kohlendioxid-Absorptionsrate im BisDMAPA/Piperazin-Gemisch ist somit um bis zu mehr als dreimal höher als beim Einsatz von reinem BisDMAPA in gleicher Gesamtkonzentration von 30 Gew.-% Amin in wässriger Lösung.

Demgegenüber zeigt die wässrige Lösung von 31,2 Gew-% MEA die höchsten relativen Absorptionsraten von 378% im Falle einer Beladung von 10 $Nm^3$ $CO_2$ pro t Absorptionsmittel und von 541% im Falle einer Beladung von 20 $Nm^3$ $CO_2$ pro t Absorptionsmittel. Hier ist jedoch zu berücksichtigen, dass gemäß Beispiel 1 der Einsatz einer reinen MEA-Lösung in Wasser gegenüber einem BisDMAPA/Piperazin-Gemisch einen wesentlich höheren Energiebedarf (Dampfmenge) zur Regenerierung aufweist.

So würde eine wässrige MEA-Lösung zwar eine sehr hohe Absorptionsrate aufweisen, aber ebenso auch einen sehr hohen Energiebedarf bei der Regeneration. Umgekehrt würde eine wässrige BisDMAPA-Lösung nur eine unzureichend niedrige Absorptionsrate aufweisen, was bei der technischen Umsetzung eine wesentlich größere Absorberkolonne erfordern würde. Die Beispiele 1 und 2 belegen, dass durch den Einsatz einer entsprechenden Mischung überraschenderweise ein sehr ausgewogenes Absorptionsmittel erhalten wird, welches sowohl eine hohe Absorptionsrate aufweist als auch einen sehr niedrigen Energiebedarf zur Regeneration erfordert.

Zudem wurde in den Versuchen auch der Effekt durch Zugabe von Aktivkohle untersucht. Hierzu wurde eine Mischung aus 15 Gew.-% BisDMAPA und 15 Gew.-% Piperazin zusätzlich mit 0,1 Gew.-% Aktivkohle (Norit SA Super, BET-Oberfläche 1150 $m^2/g$) versetzt und analog der anderen Beispiele die relative Absorptionsrate ermittelt. Gegenüber der Mischung aus 15 Gew.-% BisDMAPA und 15 Gew.-% Piperazin ohne Aktivkohle steigt die relative Absorptionsrate bei Gegenwart von nur 0,1 Gew.-% Aktivkohle bei einer Beladung von 10 $Nm^3$ $CO_2$ pro t Absorptionsmittel von 269% auf 396% und bei einer Beladung von 20 $Nm^3$ $CO_2$ pro t Absorptionsmittel von 366% auf 636%. Die Ergebnisse zeigen somit eine weitere, signifikante Steigerung der relativen Absorptionsrate durch die Gegenwart von Aktivkohle.

Tabelle 1: Relative Kreislaufkapazität und Dampfmengenbedarf normiert auf MEA

| Absorptionsmittel [% in Gew.-%] | m [Oligoamin (A)] / m [Aktivator (B)] | {m [Oligoamin (A)] + m [Aktivator (B)]} / m [Wasser] | Konzentration an Aminen bezogen auf Gesamtmenge [Gew.-%] | Relative Kreislaufkapazität [%] | Relativer Dampfmengenbedarf [%] |
|---|---|---|---|---|---|
| 30% MEA | --- | --- | 30 | 100 | 100 |
| 15% BisDMAPA + 15% Pip | 1 | 0,43 | 30 | 128 | 68 |
| MEA = Monoethanolamin<br>BisDMAPA = Bis(3-dimethylamino-propyl)-amin<br>Pip = Piperazin | | | | | |

Tabelle 2: Relative Absorptionsrate von verschiedenen Absorptionsmittel bei einer Beladung mit 10 und 20 $Nm^3$ $CO_2$ /t normiert auf BisDMAPA

| Absorptionsmittel [% in Gew.-%] | m [Oligoamin (A)] / m [Aktivator (B)] | {m [Oligoamin (A)] + m [Aktivator (B)]} / m [Wasser] | Konzentration an Aminen bezogen auf Gesamtmenge [Gew.-%] | Relative Absorptionsrate bei einer Beladung von 10 $Nm^3$ $CO_2$ pro t Absorptionsmittel [%] | Relative Absorptionsrate bei einer Beladung von 20 $Nm^3$ $CO_2$ pro t Absorptionsmittel [%] |
|---|---|---|---|---|---|
| 31,2% MEA | --- | --- | 31,2 | 378 | 541 |
| 20% BisDMAPA + 10% Pip | 2 | 0,43 | 30 | 229 | 307 |
| 15% BisDMAPA + 15% Pip | 1 | 0,43 | 30 | 269 | 366 |
| 130% BisDMAPA | --- | --- | 30 | 100 | 100 |
| 28,6% BisDMAPA+ 1,4% Pip | 20,4 | 0,43 | 30 | 145 | 182 |
| 15% BisDMAPA + 15% Pip + 0,1% AC. | 1 | 0,43 | 30 | 396 | 636 |
| MEA = Monoethanolamin<br>BisDMAPA = Bis(3-dimethylamino-propyl)-amin<br>Pip = Piperazin<br>AC = Aktivkohle (Norit SA Super) | | | | | |

**Patentansprüche**

1. Absorptionsmittel für Sauergase enthaltend

(A) ein Oligoamin der allgemeinen Formel **(I)**

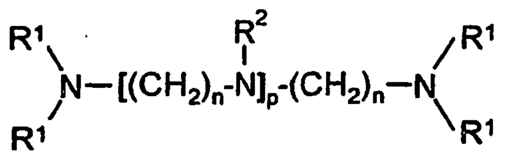

**(I)**

worin
$R^1$ gleich $C_1$- bis $C_3$-Alkyl,
$R^2$ gleich Wasserstoff oder $C_1$- bis **$C_3$-Alkyl,**
n gleich 2 bis 6, und
p gleich 1 bis 3; und
(B) ein Piperazinderivat der allgemeinen Formel (II)

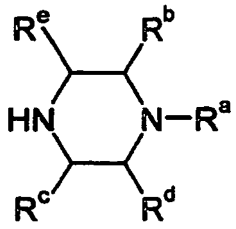

(II)

worin
$R^a$ gleich Wasserstoff, $C_1$- bis $C_3$-Alkyl, $-CH_2CH_2OH$ oder $-(CH_2)_mNH_2$ mit m gleich 1 bis 3, und
$R^b$ gleich Wasserstoff, $C_1$- bis $C_3$-Alkyl oder $-(CH_2)_nNH_2$ mit n gleich 1 bis 3, $R^c$ gleich Wasserstoff, $C_1$- bis $C_3$-Alkyl oder $-(CH_2)_oNH_2$ mit o gleich 1 bis 3, $R^d$ gleich Wasserstoff, $C_1$- bis $C_3$-Alkyl oder $-(CH_2)_pNH_2$ mit p gleich 1 bis 3, und
Re gleich Wasserstoff, $C_1$- bis $C_3$-Alkyl oder $-(CH_2)_qNH_2$ mit q gleich 1 bis 3, wobei das Gewichtsverhältnis von Oligoamin (A) zum Piperazinderivat (B)

$$m[\text{Oligoamin (A)}] / m[\text{Piperazinderivat (B)}]$$

0,2 bis 25 beträgt.

**2.** Absorptionsmittel für Sauergase gemäß Anspruch 1, bei dem das Gewichtsverhältnis von Oligoamin (A) zum Piperazinderivat (B)

$$m[\text{Oligoamin (A)}] / m[\text{Piperazinderivat (B)}]$$

0,2 bis 4 beträgt.

**3.** Al sorptionsmittel für Sauergase gemäß den Ansprüchen 1 bis 2, bei dem die Konzentration an Oligoamin (A) plus Piperazinderivat (B) bezogen auf die Gesamtmenge des Absorptionsmittels 10 bis 60 Gew.-% beträgt.

**4.** Absorptionsmittel für Sauergase gemäß den Ansprüchen 1 bis 3, bei dem die Konzentration an Oligoamin (A) bezogen auf die Gesamtmenge des Absorptionsmittels zwischen 1 und 20 Gew.-% beträgt.

**5.** Absorptionsmittel für Sauergase gemäß den Ansprüchen 1 bis 4, bei dem das Oligoamin (A) Bis(3-dimethylamino-propyl)-amin ist.

**6.** Absorptionsmittel für Sauergase gemäß den Ansprüchen 1 bis 5, bei dem das Piperazinderivat (B) Piperazin ist.

**7.** Absorptionsmittel für Sauergase gemäß den Ansprüchen 1 bis 6 enthaltend Wasser, wobei das Gewichtsverhältnis der Summe von Oligoamin (A) plus Piperazinderivat (B) zu Wasser

$$\{m[\text{Oligoamin (A)}] + m[\text{Piperazinderivat (B)}]\} / m[\text{Wasser}]$$

0,1 1 bis 1,5 beträgt.

**8.** Verfahren zur Entfernung von Sauergasen aus einem Gasstrom durch Inkontaktbringen des Gasstroms bei einem Druck von 0,05 bis 10 MPa abs mit einem auf eine Temperatur von 20 bis 80°C temperierten flüssigen Absorptionsmittels, **dadurch gekennzeichnet, dass** man als flüssiges Absorptionsmittel ein Absorptionsmittel für Sauergase gemäß Anspruch 7 einsetzt.

**9.** Verfahren gemäß Anspruch 8, **dadurch gekennzeichnet, dass** man die Entfernung des Sauergases in einer im

Gegenstrom betriebenen Waschkolonne, bei der sich im Inneren eine diskontinuierliche flüssige Phase ausbildet, in Gegenwart von im Inneren der Waschkolonne vorhandener Aktivkohle durchführt.

**10.** Verfahren gemäß den Ansprüchen 8 bis 9, **dadurch gekennzeichnet, dass** man Biogas oder Rauchgas einsetzt und man das Verfahren bei einem Druck von 0,05 bis 0,5 MPa abs durchführt.

**11.** Verfahren gemäß den Ansprüchen 8 bis 10, **dadurch gekennzeichnet, dass** der Gasstrom 0,1 bis 21 Vol.-% Sauerstoff enthält.

**12.** Verfahren gemäß den Ansprüchen 8 bis 11, **dadurch gekennzeichnet, dass** das Sauergas Kohlendioxid umfasst und die Kohlendioxid-Konzentration im Gasstrom 0,1 bis 50 Vol.-% beträgt.

**13.** Verfahren gemäß den Ansprüchen 8 bis 12, **dadurch gekennzeichnet, dass** man das nach dem Inkontaktbringen mit dem Gasstrom mit Kohlendioxid beladene Absorptionsmittel durch Erwärmung, durch Entspannung, durch Strippung mit einem inerten Fluid, oder einer Kombination aus zwei oder allen drei der genannten Maßnahmen regeneriert.

## Claims

**1.** An absorption medium for acid gases which comprises

(A) an oligoamine of the general formula (I)

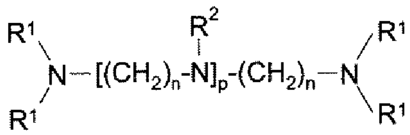

(I)

in which
$R^1$ is $C_1$- to $C_3$-alkyl,
$R^2$ is hydrogen or $C_1$- to $C_3$-alkyl,
n is 2 to 6, and
p is 1 to 3; and
(B) a piperazine derivative of the general formula (II)

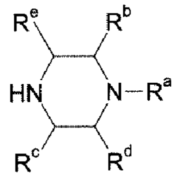

(II)

in which
$R^a$ is hydrogen, $C_1$- to $C_3$-alkyl, $-CH_2CH_2OH$ or $-(CH_2)_mNH_2$ where
m is 1 to 3, and
$R^b$ is hydrogen, $C_1$- to $C_3$-alkyl or $-(CH_2)_nNH_2$ where
n is 1 to 3,
$R^c$ is hydrogen, $C_1$- to $C_3$-alkyl or - $(CH_2)_oNH_2$ where
o is 1 to 3,
$R^d$ is hydrogen, $C_1$- to $C_3$-alkyl or $-(CH_2)_pNH_2$ where
p is 1 to 3,
and
$R^e$ is hydrogen, $C_1$- to $C_3$-alkyl or $-(CH_2)_qNH_2$ where
q is 1 to 3,
wherein the weight ratio of oligoamine (A) to the piperazine derivative (B)

m[oligoamine (A)]/m[piperazine derivative (B)]

is 0.2 to 25.

2. The absorption medium for acid gases according to claim 1 in which the weight ratio of oligoamine (A) to the piperazine derivative (B)

m[oligoamine (A)]/m[piperazine derivative (B)]

is 0.2 to 4.

3. The absorption medium for acid gases according to claims 1 to 2 in which the concentration of oligoamine (A) plus piperazine derivative (B) is 10 to 60% by weight, based on the total amount of the absorption medium.

4. The absorption medium for acid gases according to claims 1 to 3 in which the concentration of oligoamine (A) is between 1 and 20% by weight, based on the total amount of the absorption medium.

5. The absorption medium for acid gases according to claims 1 to 4 in which the oligoamine (A) is bis(3-dimethylaminopropyl)amine.

6. The absorption medium for acid gases according to claims 1 to 5 in which the piperazine derivative (B) is piperazine.

7. The absorption medium for acid gases according to claims 1 to 6 comprising water, wherein the weight ratio of the sum of oligoamine (A) plus piperazine derivative (B) to water

{m[oligoamine (A)] + m[piperazine derivative (B)]}/ m[water]

is 0.11 to 1.5.

8. A process for removing acid gases from a gas stream by contacting the gas stream at a pressure of 0.05 to 10 MPa abs with a liquid absorption medium which is brought to and maintained at a temperature of 20 to 80°C, which comprises using as liquid absorption medium an absorption medium for acid gases according to claim 7.

9. The process according to claim 8, wherein the acid gas is removed in a scrubbing column operated in countercurrent flow, in which, in the interior, a discontinuous liquid phase forms, in the presence of activated carbon that is present in the interior of the scrubbing column.

10. The process according to claims 8 to 9, wherein biogas or flue gas is used and the process is carried out at a pressure of 0.05 to 0.5 MPa abs.

11. The process according to claims 8 to 10, wherein the gas stream comprises 0.1 to 21% by volume of oxygen.

12. The process according to claims 8 to 11, wherein the acid gas comprises carbon dioxide and the carbon dioxide concentration in the gas stream is 0.1 to 50% by volume.

13. The process according to claims 8 to 12, wherein the absorption medium which is loaded with carbon dioxide after being contacted with the gas stream is regenerated by heating, by expansion, by stripping with an inert fluid, or a combination of two or all three of said measures.

**Revendications**

1. Agent d'absorption pour gaz acides, contenant :

(A) une oligoamine de formule générale (I)

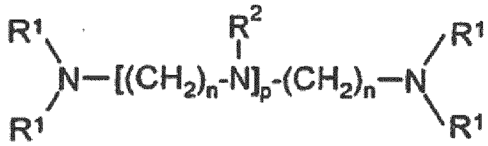

(I)

dans laquelle

$R^1$ représente un alkyle en $C_1$ à $C_3$,
$R^2$ représente l'hydrogène ou un alkyle en $C_1$ à $C_3$,
n représente 2 à 6, et
p représente 1 à 3 ; et

(B) un dérivé de pipérazine de formule générale (II)

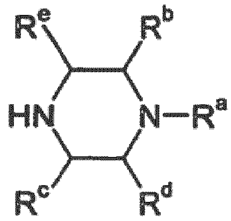

(II)

dans laquelle
$R^a$ représente l'hydrogène, un alkyle en $C_1$ à $C_3$, - $CH_2CH_2OH$ ou $-(CH_2)_mNH_2$ avec m représentant 1 à 3, et
$R^b$ représente l'hydrogène, un alkyle en $C_1$ à $C_3$ ou - $(CH_2)_nNH_2$ avec n représentant 1 à 3,
$R^c$ représente l'hydrogène, un alkyle en $C_1$ à $C_3$ ou - $(CH_2)_oNH_2$ avec o représentant 1 à 3,
$R^d$ représente l'hydrogène, un alkyle en $C_1$ à $C_3$ ou - $(CH_2)_pNH_2$ avec p représentant 1 à 3, et
$R^e$ représente l'hydrogène, un alkyle en $C_1$ à $C_3$ ou - $(CH_2)_qNH_2$ avec q représentant 1 à 3,
le rapport en poids entre l'oligoamine (A) et le dérivé de pipérazine (B)

m[oligoamine (A)]/m[dérivé de pipérazine (B)]

étant de 0,2 à 25.

2. Agent d'absorption pour gaz acides selon la revendication 1, dans lequel le rapport en poids entre l'oligoamine (A) et le dérivé de pipérazine (B)

m[oligoamine (A)]/m[dérivé de pipérazine (B)]

est de 0,2 à 4.

3. Agent d'absorption pour gaz acides selon les revendications 1 à 2, dans lequel la concentration en oligoamine (A) plus dérivé de pipérazine (B) par rapport à la quantité totale de l'agent d'absorption est de 10 à 60 % en poids.

4. Agent d'absorption pour gaz acides selon les revendications 1 à 3, dans lequel la concentration en oligoamine (A) par rapport à la quantité totale de l'agent d'absorption est comprise entre 1 et 20 % en poids.

5. Agent d'absorption pour gaz acides selon les revendications 1 à 4, dans lequel l'oligoamine (A) est la bis(3-diméthylamino-propyl)-amine.

6. Agent d'absorption pour gaz acides selon les revendications 1 à 5, dans lequel le dérivé de pipérazine (B) est la pipérazine.

7. Agent d'absorption pour gaz acides selon les revendications 1 à 6, contenant de l'eau, le rapport en poids entre la somme de l'oligoamine (A) plus le dérivé de pipérazine (B) et l'eau

$$\{m[\text{oligoamine (A)}]+m[\text{dérivé de pipérazine (B)}]\}/m[\text{eau}]$$

étant de 0,11 à 1,5.

8. Procédé d'élimination de gaz acides d'un courant gazeux par mise en contact du courant gazeux à une pression de 0,05 à 10 MPa abs avec un agent d'absorption liquide conditionné à une température de 20 à 80 °C, **caractérisé en ce qu'**un agent d'absorption pour gaz acides selon la revendication 7 est utilisé en tant qu'agent d'absorption liquide.

9. Procédé selon la revendication 8, **caractérisé en ce que** l'élimination du gaz acide est réalisée dans une colonne de lavage exploitée à contre-courant, à l'intérieur de laquelle se forme une phase liquide discontinue, en présence de charbon actif présent à l'intérieur de la colonne de lavage.

10. Procédé selon les revendications 8 à 9, **caractérisé en ce qu'**un biogaz ou un gaz de combustion est utilisé et le procédé est réalisé à une pression de 0,05 à 0,5 MPa abs.

11. Procédé selon les revendications 8 à 10, **caractérisé en ce que** le courant gazeux contient 0,1 à 21 % en volume d'oxygène.

12. Procédé selon les revendications 8 à 11, **caractérisé en ce que** le gaz acide comprend du dioxyde de carbone et la concentration en dioxyde de carbone du courant gazeux est de 0,1 à 50 % en volume.

13. Procédé selon les revendications 8 à 12, **caractérisé en ce que** l'agent d'absorption chargé avec du dioxyde de carbone après la mise en contact avec le courant gazeux est régénéré par chauffage, par détente, par extraction avec un fluide inerte, ou une combinaison de deux ou des trois mesures citées.

Fig. 1

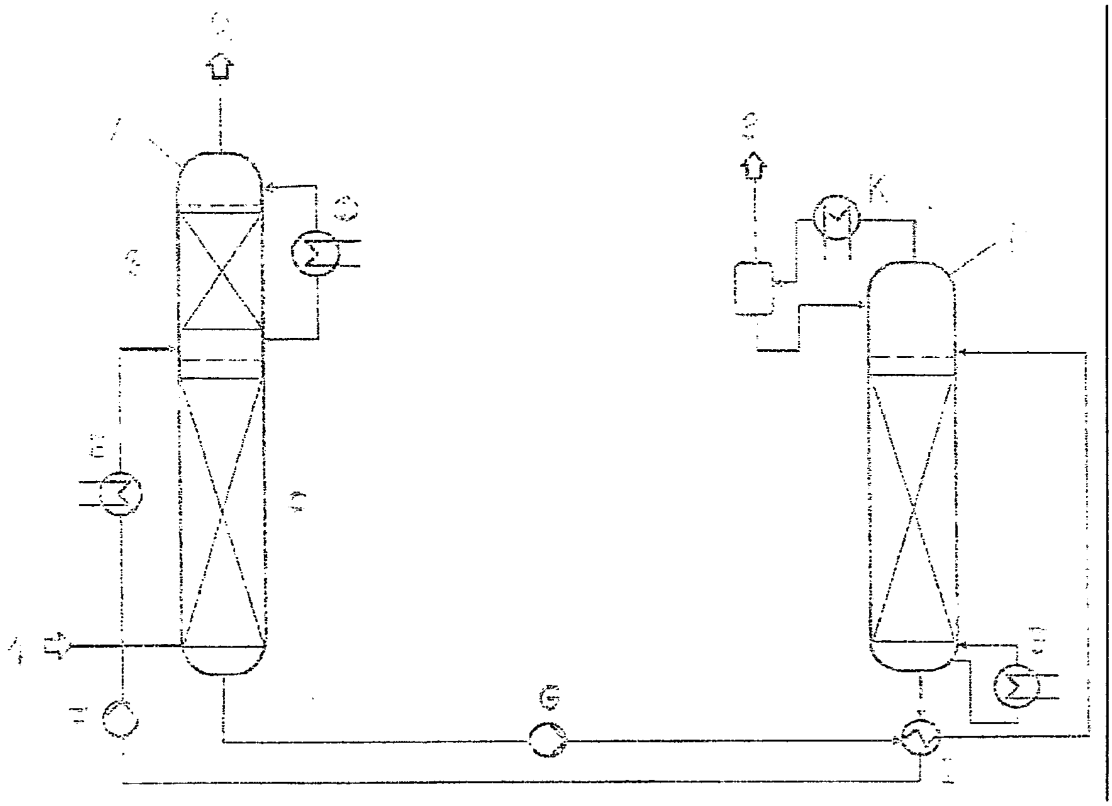

Fig. 2

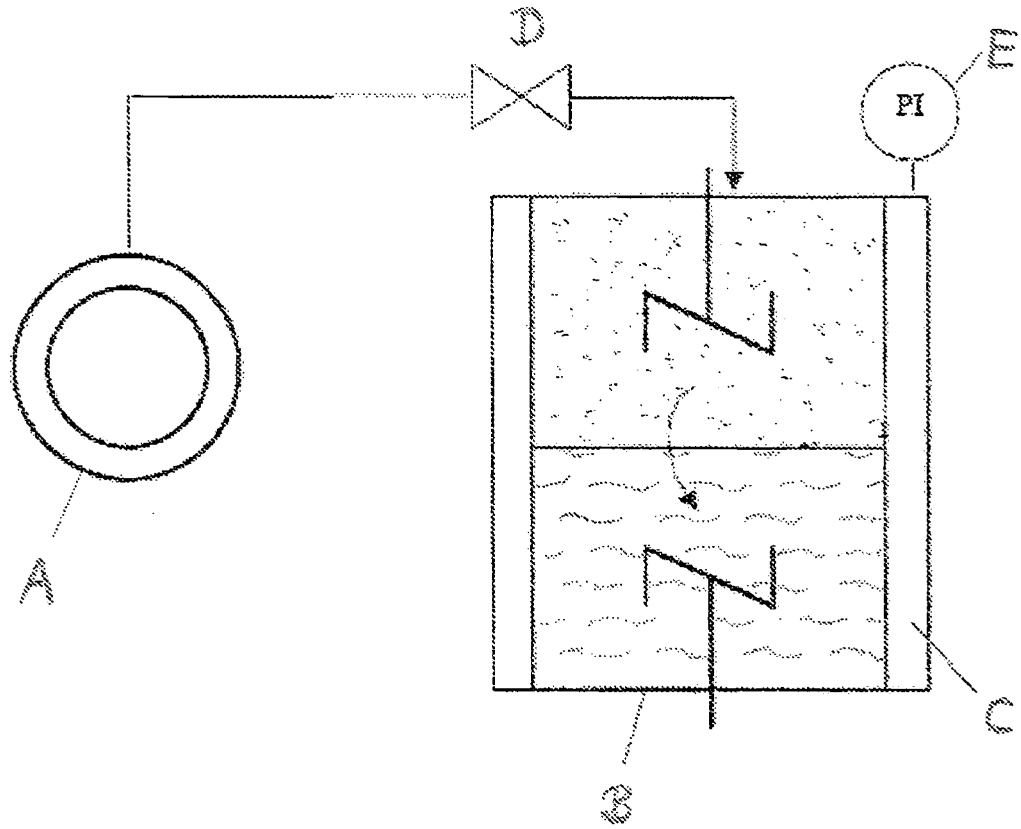

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4336233 A
- EP 0879631 A
- US 6165433 A
- WO 2005087350 A
- WO 02007862 A
- WO 2007144372 A
- WO 99004885 A


### In der Beschreibung aufgeführte Nicht-Patentliteratur


- **SATISH REDDY et al.** Fluor Corporation in einem Abstract zur Second National Conference on Carbon Sequestration des National Energy Technology Laboratory. *Department of Energy,* 05. Mai 2003